(19) Europäisches Patentamt

European Patent Office

Office européen des brevets

(11) **EP 1 037 200 A2**

(12) **EUROPEAN PATENT APPLICATION**

(43) Date of publication:
**20.09.2000 Bulletin 2000/38**

(51) Int. Cl.⁷: **G11B 5/53**

(21) Application number: **00105461.8**

(22) Date of filing: **15.03.2000**

(84) Designated Contracting States:
**AT BE CH CY DE DK ES FI FR GB GR IE IT LI LU
MC NL PT SE**
Designated Extension States:
**AL LT LV MK RO SI**

(30) Priority: **18.03.1999 JP 7408899**

(71) Applicant: **SONY CORPORATION
Tokyo (JP)**

(72) Inventors:
• **Kayama, Shun
  Shinagawa-ku, Tokyo (JP)**
• **Ogasawara, Junichi
  Shinagawa-ku, Tokyo (JP)**

(74) Representative:
**MÜLLER & HOFFMANN Patentanwälte
Innere Wiener Strasse 17
81667 München (DE)**

(54) **Rotary magnetic recording/reproducing apparatus and method of fabricating the same**

(57) To provide a rotary magnetic recording/reproducing apparatus and a method of fabricating a rotary magnetic recording/reproducing apparatus which can be fabricated, without any cutting process, rather easily even in the complicated shape and can prevent adhesion of tape type information storage medium, there is provided a rotary magnetic recording/reproducing apparatus comprising a stationary member (1) and a rotary member (2) which is provided with at least one of the magnetic write head (WH) and magnetic read head (RH) to write information on a tape type information storage medium TP or to read information of the tape type magnetic storage medium TP when it is rotated against the stationary member, in which the running surfaces of at least one of the stationary member (1) and rotary member (2) on which the tape type magnetic storage medium TP runs are formed of a liquid crystal polymer including at least one of glass material or carbon fiber by an injection molding method.

FIG. 1

EP 1 037 200 A2

**Description**

BACKGROUND OF THE INVENTION

Field of the Invention

The present invention relates to a rotary magnetic recording/reproducing apparatus for recording information on a tape type magnetic storage medium or reproducing information from such magnetic storage medium and a method of fabricating the same apparatus.

Description of Related Art

A rotary magnetic recording/reproducing apparatus of this type is called a rotary magnetic head apparatus or a rotary magnetic drum apparatus and is used, for example, into a video tape recorder (VTR) or the like. The rotary magnetic recording/reproducing apparatus comprises a rotary drum (rotary member) and a stationary drum (stationary member) and the rotary member continuously rotates with a force of motor against the stationary member.

The rotary member is provided, for example, with a read head or a write head. When this rotary member rotates, for example, in the helical scanning system against a magnetic tape as a tape type magnetic storage medium, information can be recorded on the magnetic tape or reproduced from the magnetic tape.

The rotary member and stationary member of this type have been formed of aluminum because it assures easier machining. For example, a rotary drum and a stationary drum can be fabricated by the cutting process from an aluminum ingot and thereby a rotary member and stationary member can also be fabricated.

However, since such rotary drum and stationary drum are processed mechanically one by one by the cutting process, many processing steps are required and therefore there is a limitation for cost reduction. Moreover, large investment is required to prepare such machining facilities.

Moreover, since mechanical machining is conducted for the rotary drum and stationary drum, if shape of rotary drum and stationary drum are complicated, still higher cutting technique is required and the number of processes is also increased.

In addition, it is also required for the aluminum rotary drum and stationary drum to mount the circuit forming parts such as flexible substrate and ordinary printed circuit board which are fabricated separately and moreover such works are troublesome.

Further, it is also a probable phenomenon that a very thinner magnetic tape is adhered, during the running of tape, to the tape running surface of the aluminum rotary drum and stationary drum.

SUMMARY OF THE INVENTION

It is therefore an object of the present invention to provide a rotary magnetic recording/reproducing apparatus which can solve the problems explained above, may be formed without the cutting process, can generate a complicated shape with rather simplified process and can prevent adhesion of a tape type magnetic storage medium and to provide a method of fabricating the rotary magnetic recording/reproducing apparatus.

According to an aspect of the present invention, there is provided a rotary magnetic recording/reproducing apparatus, comprising a stationary member, and a rotary member on which at least one of a magnetic write head and a magnetic read head is installed to record information on a magnetic storage medium like a tape or to reproduce information from the magnetic storage medium like a tape through continuous rotation thereof against the stationary member, whereby the running surface, on which the tape type magnetic storage medium runs, in at least one of the stationary member and rotary member is formed by the injection molding method using liquid crystal polymer including at least one of glass material and carbon fiber.

According to the aspect, at least one running surface of the stationary member and rotary member is formed by the injection molding of liquid crystal polymer including at least one of glass fiber and carbon fiber. Thereby, at least one of the stationary member and rotary member, even if these are complicated in shape, can be formed by the injection molding without any mechanical cutting process. Since the liquid crystal polymer is injection-molded, electrical circuits can easily be formed at least one surface of the stationary member and rotary member.

According to another aspect of the present invention, there is provided a rotary magnetic recording/reproducing apparatus as described above, wherein plural grooves are formed in the predetermined pitch on the running surface and the glass material includes at least one of glass beads and glass fiber.

Thereby, contraction coefficient may be reduced, thermal deformation temperature may be raised and cost reduction can also be expected. Moreover, friction coefficient $\mu$ with a tape type information storage medium can also be reduced.

According to another aspect of the present invention, there is provided a rotary magnetic recording/reproducing apparatus as described above, wherein a weight ratio of at least one of the glass material and carbon fiber against the liquid crystal polymer ranges from 30% to 50%.

According to the aspect, when a weight ration of glass material or carbon fiber against the liquid crystal polymer is under 30%, it is not preferable because contraction coefficient is increased, thermal deformation temperature is lowered and cost increase is assured. When this weight ratio exceeds 50%, molding and mixing are impossible because a part not including the resin for combining carbons is generated.

According to another aspect of the present invention, there is provided a rotary magnetic recording/reproducing apparatus as described above, wherein the grooves are formed along the direction parallel to the shaft direction of the rotary member and a relationship equation of the pitch p of the grooves and depth d of the grooves is expressed as follows:

$$0.5 \cong d/p \cong 0.05.$$

According to the aspect, when d/p is smaller than 0.05, it is not preferable because adhesion with tape type information storage medium (increase of friction coefficient $\mu$ ) occurs easily. When d/p is larger than 0.5, metal die molding is now difficult. Moreover, it is also not preferable because removal from the metal die of molded product becomes difficult.

Since the grooves are formed along the direction parallel to the shaft direction of the rotary member, adhesion of tape at the running surface of the tape type magnetic storage medium can be prevented and increase of friction coefficient $\mu$ of the tape type magnetic storage medium in such a case that the type magnetic storage medium is running repeatedly can also be prevented.

According to another aspect of the present invention, there is provided a rotary magnetic recording/reproducing apparatus as described above, wherein the grooves are formed in the predetermined pitch along the direction orthogonal to the shaft direction of the rotary member.

According to the aspect, since the grooves are formed along the direction orthogonal to the shaft direction of the rotary member, adhesion of tape type magnetic storage medium can be prevented and increase of friction coefficient of the tape type magnetic storage medium due to the repetitive running of medium can also be prevented.

According to another aspect of the present invention, there is provided a rotary magnetic recording/reproducing apparatus as described above, wherein the grooves are formed in the predetermined pitch along the diagonal direction against the shaft direction of the rotary member.

According to the aspect, since the grooves are formed in the pitch along the diagonal direction against the shaft direction of the rotary member, adhesion of tape type magnetic storage medium at the running surface can be prevented and increase of friction coefficient due to repeated running of tape type magnetic storage medium can also be prevented.

According to another aspect of the present invention, there is provided a rotary magnetic recording/reproducing apparatus as described above, wherein the cross-section of the grooves has triangular shape.

According to another aspect of the present invention, there is provided a rotary magnetic recording/reproducing apparatus as described above, wherein the cross-section of said grooves has square shape.

According to another aspect of the present invention, there is provided a rotary magnetic recording/reproducing apparatus as described above, wherein the cross-section of the grooves has arc shape.

According to another aspect of the present invention, there is provided a method of fabricating a rotary magnetic recording/reproducing apparatus, comprising stationary member and rotary member on which at least one of a magnetic write head and a magnetic read head is installed to record information on a magnetic storage medium like a tape or to reproduce information from said magnetic storage medium like a tape through continuous rotation thereof against the stationary member, whereby the running surface, on which the tape type magnetic recording medium runs, in at least one of the stationary member and rotary member is formed by the injection molding method using liquid crystal polymer including at least one of glass material and carbon fiber.

According to the aspect, the running surface of any one of the stationary member and rotary member is formed by the injection molding of the liquid crystal polymer including any one of the glass material and carbon fiber. Thereby, one of the stationary member and rotary member can be formed easily, even if these are complicated in the shape, by the injection molding in place of the mechanical cutting process. Since injection molding is performed using the liquid crystal polymer, electrical circuits may be formed easily to at least one surface of the stationary member and rotary member.

Moreover, since plural grooves can be formed in a certain pitch on the running surface at the time of formation, adhesion of tape type magnetic storage medium to the sunning surface can be prevented and increase of friction coefficient due to repeated running of magnetic storage medium can also be increased.

According to another aspect of the present invention, there is provided a method of fabricating a rotary magnetic recording/reproducing apparatus as described above, wherein the solidifying time in the injection molding is 0.2 to 0.8 seconds and the glass material includes at least one of glass beads and glass fiber.

In the claim 11, if the solidifying time in the injection molding is shorter than 0.2 second, it is not preferable because contraction molding becomes difficult and a material having the solidifying time of 0.8 second or longer is also not preferable because contraction thereof becomes large.

According to another aspect of the present invention, there is provided a method of fabricating a rotary magnetic recording/reproducing apparatus as described above, wherein a weight ratio of at least one of the glass material and carbon fiber against the liquid crystal polymer ranges from 30% to 50%.

According to the aspect, when the weight ratio of glass material or carbon fiber for the liquid crystal polymer is under 30%, it is not preferable because it will result in increase of contraction coefficient, drop of thermal deformation temperature and cost increase. When this weight ratio exceeds 50%, molding and mixing become impossible because a part in which resin for connecting carbons disappears is generated.

According to another aspect of the present invention, there is provided a method of fabricating a rotary magnetic recording/reproducing apparatus as described above, wherein the grooves are formed along the direction parallel to the shaft direction of the rotary member and a relationship equation of the pitch p of the grooves and depth d of the grooves is expressed as follows:

$$0.5 \geqq d/p \geqq 0.05.$$

According to the aspect, if d/p is smaller than 0.05, it is not preferable because adhesion with the tape type information storage medium (increase of friction coefficient $\mu$) is generated easily. When d/p is larger than 0.5, it is also not preferable because the manufacture of metal dies becomes difficult. Moreover, this d/p is also not preferable because removal of molded product from the metal dies becomes difficult.

Since the grooves are formed along the direction parallel to the shaft direction of the rotary member, adhesion of tape type magnetic storage medium with the running surface can be prevented and increase of friction coefficient $\mu$ in such a case that the tape type magnetic storage medium is repeatedly running can also be prevented.

According to another aspect of the present invention, there is provided a method of fabricating a rotary magnetic recording/reproducing apparatus as described above, wherein the grooves are formed in the predetermined pitch along the direction orthogonal to the shaft direction of the rotary member.

According to another aspect of the present invention, there is provided a method of fabricating a rotary magnetic recording/reproducing apparatus as described above, wherein electric circuits are formed on the surface of the stationary member and rotary member.

As explained above, since electric circuits may be formed in direct on the surface of stationary member and rotary member, structure may be simplified and cost reduction can also be realized.

BRIEF DESCRIPTION OF THE DRAWINGS

Fig. 1 is a perspective view illustrating a preferred embodiment of a rotary magnetic recording/reproducing apparatus of the present invention.

Fig. 2 is a diagram illustrating the cross-sectional structure of the rotary magnetic recording/reproducing apparatus of Fig. 1.

Fig. 3 is a diagram illustrating an example of a rotary drum of the rotary magnetic recording/reproducing apparatus.

Fig. 4 is a cross-sectional view along the line A-A of Fig. 3.

Fig. 5 is a cross-sectional view at the area near the groove along the line B-B in Fig. 4.

Fig. 6 is a cross-sectional view at the area near the groove along the line B-B in Fig. 4.

Fig. 7 is a cross-sectional view at the area near the groove along the line B-B in Fig. 4.

Fig. 8 is a diagram of an example of metal die for injection molding to form a rotary drum or a stationary drum of the rotary magnetic recording/reproducing apparatus of the present invention.

Fig. 9 is a diagram illustrating the condition integrating the fixed side metal die and moving side metal die of the metal die for injection molding of Fig. 8.

Fig. 10 is a diagram illustrating a profile for injecting material for injection molding into a cavity.

Fig. 11 is a diagram illustrating a profile for solidifying and compressing the injected material.

Fig. 12 is a diagram illustrating a profile for isolating the moving side metal die from the fixed side metal die to remove, for example, the injection molded rotary drum.

Fig. 13 is a diagram illustrating an example of friction test result of the molded produce such as rotary drum or stationary drum, of which surface is roughed by the manual process.

Fig. 14 is a diagram illustrating an example of friction test result of the molded product including vertical grooves formed by the manual process.

Fig. 15 is a diagram illustrating an example of friction test result of the molded product including vertical groove formed by mechanical process.

Fig. 16 is a diagram illustrating an example of a measuring instrument used for friction test of a magnetic tape.

Fig. 17 is a diagram illustrating a molding example of the other groove in the present invention.

DESCRIPTION OF THE PREFERRED EMBODIMENTS

The preferred embodiments of the present invention will be explained in detail with reference to the accompanying drawings.

The embodiments explained below are preferred practical examples with various preferable limitations, but the scope of the present invention is never limited thereto unless otherwise described particularly in the following description.

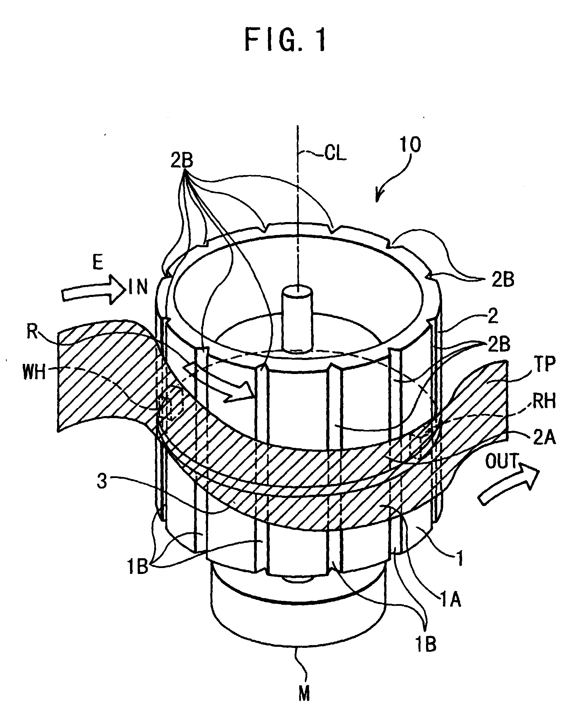

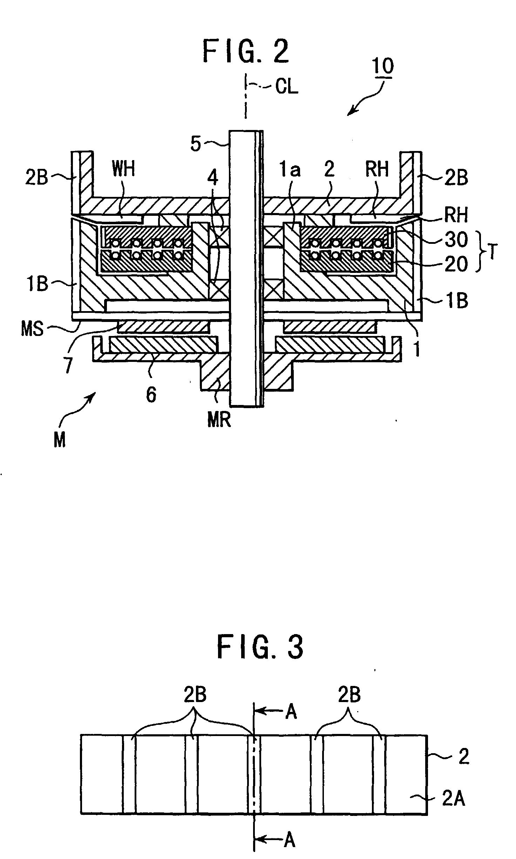

Fig. 1 is a perspective view illustrating the preference embodiment of a rotary magnetic recording/reproducing apparatus of the present invention and Fig. 2 is a cross-sectional view illustrating an example of internal structure of the rotary magnetic recording/reproducing apparatus of Fig. 1.

In Fig. 1 and Fig. 2, a rotary magnetic recording/reproducing apparatus 10 is schematically provided with a stationary drum 1 as a stationary member, a rotary drum 2 as a rotary member and a motor M, etc.

The rotary drum 2 is fixed to a shaft 5 through pressurized insertion. The stationary drum 1 has a sleeve 1a and a bearing 4 is provided within this sleeve 1a. This bearing 4 supports the shaft 5 to rotate. Thereby, when the motor M rotates, the rotary drum 2 rotates, together with the shaft 5, against the stationary drum 1 around the shaft 5.

The rotary drum 2 has a rotary core 30 of a rotary transformer T and the stationary drum 1 has a stationary core 20 of the rotary transformer T. These rotary core 30 and stationary core 20 form a rotary transformer T which is a non-contact type signal transfer apparatus.

The rotary drum 2 has, for example, a write head WH and a read head RH. The rotary drum 2 includes only the read head RH in some cases or includes both write head WH and read head RH in a certain case. In other case, the rotary drum 2 includes sometimes a plurality sets of write head and read head.

As illustrated in Fig. 2, at the lower end of shaft 5, a rotor MR of motor M is fixed. This rotor MR has a rotor magnet 6. The stator substrate MS of motor M has a coil 7 for drive. The rotor MR of motor M continuously rotates together with the shaft 5 and rotary drum 2 with magnetic mutual effect of the drive coil 7 and drive magnet 6 by feeding the electrical power to the coil 7 from the external circuit through the circuits of the stator substrate MS.

A write signal can be supplied on the non-contact basis to the write head WH via the rotary transformer T. On the contrary, the read signal of a magnetic tape TP obtained through the read head RH can be supplied to the side of stator substrate MS via the rotary transformer T.

As illustrated in Fig. 1, the magnetic tape TP (tape type magnetic storage medium) is controlled to run to the outgoing side OUT from the incoming side IN of the tape running direction E along a lead guide 3 of the stationary drum 1. That is, the magnetic tape TP is guided in such away as running along the tape running surface 2A of the rotary drum 2 and the tape running surface 1A of the stationary drum 1. In this timing, since the rotary drum 2 continuously rotates along the rotating direction R, the write head WH writes information on the magnetic tape TP by the helical scanning system or the read head RH reads information recorded on the magnetic tape TP by the helical scanning system.

As illustrated in Fig. 1 and Fig. 2, plural grooves 1B, 2B are preferably formed in the predetermined pitch on the tape running surface 1A of the stationary drum 1 and tape running surface 2A of the rotary drum 2. Depending on the type of rotary magnetic recording/reproducing apparatus 10, such grooves may be formed only on the tape running surface 2A of the rotary drum 2 or only on the tape running surface 1A of the stationary drum 1.

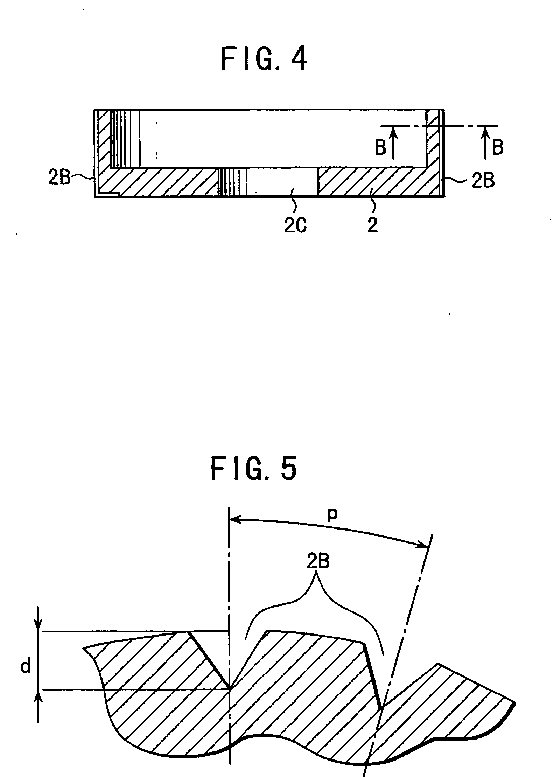

However, in the examples of Fig. 1 and Fig. 2, the grooves 1B, 2B are respectively formed to the tape running surfaces 1A, 2A. These grooves 1B, 2B are formed in parallel to the shaft direction CL of shaft 5 and moreover in the predetermined pitch illustrated in Fig. 5. The pitch of the groove 1B at the tape running surface 1A may be identical to or different from the pitch of the groove 2B at the tape running surface 2A.

Fig. 3 illustrates only the rotary drum 2 in Fig. 1 and Fig. 2. At the tape running surface 2A of this rotary drum 2, the groove 2B is formed in every predetermined pitch for the entire part of circumference. Fig. 4 is a cross-sectional view along the line A-A at the rotary drum 2. At the center of rotary drum 2, a hole 2C is provided for insertion of shaft 5 of Fig. 2.

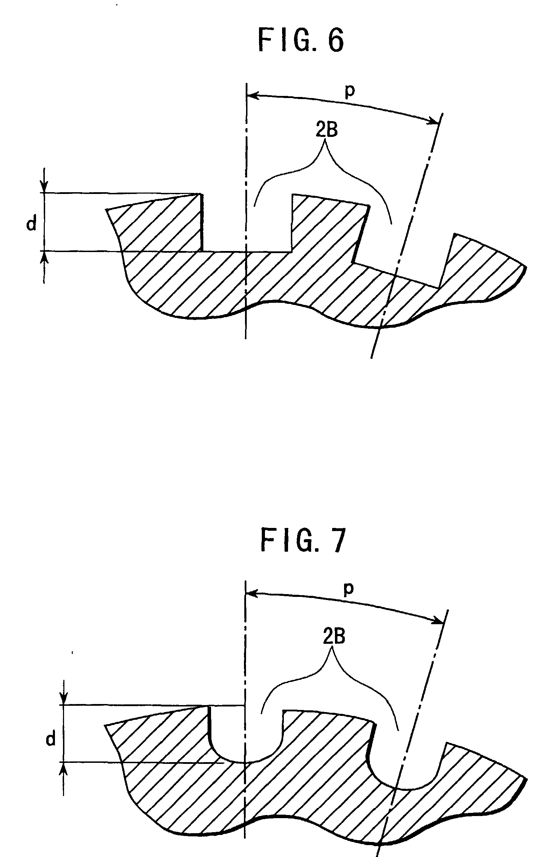

An example of the cross-sectional shape along the line B-B in Fig. 4 is illustrated in Fig. 5 to Fig. 7. In the example of Fig. 5, the groove is formed almost in the triangular shape and in the example of Fig. 6, the groove 2B is formed in the square shape, while in Fig. 7, the groove 2B is formed in the arc shape or semi-circular shape.

Depth of groove 2B in Fig. 5 to Fig. 7 is defined as d and the interval, namely pitch of the adjacent groove 2B is defined as p.

The rotary drum illustrated in Fig. 1 to Fig. 4 and stationary drum 1 illustrated in Fig. 1 and Fig. 2 are formed by injection molding using the liquid crystal polymer including at least one of glass material and carbon fiber. At the time of injection molding, a plurality of grooves 2B or 1B are formed on the tape running surface 2A or 1A of Fig. 1.

As a material to form the rotary drum 2 or stationary drum 1, the liquid crystal polymer including at least one of the glass material and carbon fiber is used, but this glass material includes at least one of glass beads or glass fiber.

Therefore, those including a discrete glass beads or discrete glass fiber or both glass beads and glass fiber may be used as the glass material. It is allowed for the liquid crystal polymer to include discrete glass beads, discrete glass fiber, discrete carbon fiber or mixture of these three elements or two elements.

Here, the liquid crystal polymer is in the liquid crystal condition in the fused condition but in the solidified polymer under the room temperature.

Therefore, at least one tape running surface 2A or 1A of the rotary drum 2 or stationary drum 1 may be formed by the injection molding of any one of the liquid crystal polymer including at least one of glass material and carbon fiber, practically liquid crystal polymer including glass material, liquid crystal polymer including carbon fiber or the liquid crystal polymer including both glass material and carbon fiber, or the like.

The process for obtaining rough surface can be done, for example, by the manual method to the tape running surface 2A or 1A of the rotary drum 2 and stationary drum 1 illustrated in Fig. 1 to Fig. 4. More preferably, it is recommended to form the grooves 2B, 1B to these tape running surfaces 2A, 1A as illustrated in Fig. 1 and Fig. 2.

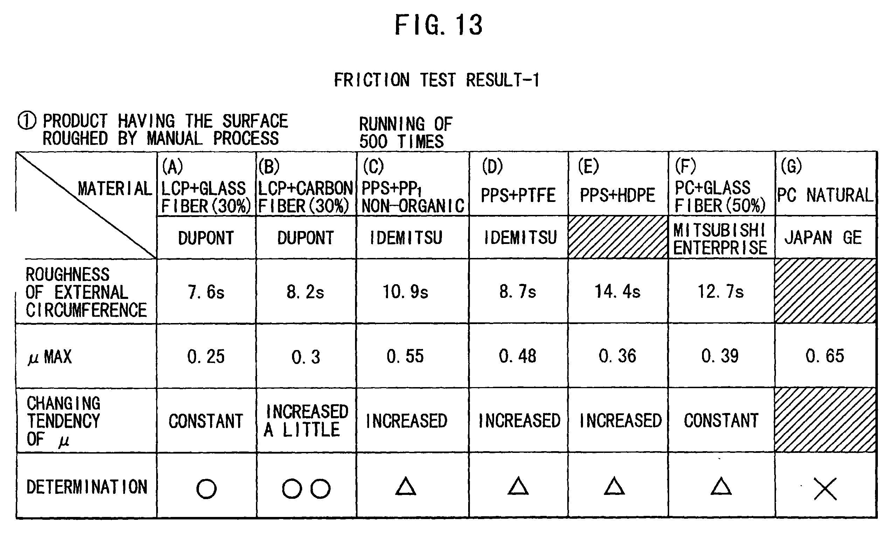

Fig. 13 illustrates an example of the friction test result in such a case that the process of obtaining rough surface is done by the manual method to the tape running surfaces 2A, 1A of the rotary drum 2 and stationary drum 1 as illustrated in Fig. 1 and Fig. 2. Namely, in this example, the surface forming the projected and recessed portions to the entire circumference is formed by the manual method to the tape running surfaces 2A, 1A.

In Fig. 13, roughness of external circumference of tape running surface, friction coefficient µmax, changing tendency of the friction coefficient µ and determination for test result are indicted in the vertical direction.

In the columns in the lateral direction of Fig. 13, examples of various materials are indicated. (A) in Fig. 13 is an example in which glass fiber (GF) is included in 30% in terms of the weight ratio to the liquid crystal polymer (LCP) manufactured by Dupont Corporation.

(B) in Fig. 13 is an example manufactured by Dupont Corporation in which carbon fiber (CF) is mixed in 30% in terms of the weight ratio to the liquid crystal polymer (LCP). (C) in Fig. 13 is an in organic example manufactured by Idemitsu Material Co., Ltd. in which PP (polypropylene) is included to PPS (polyphenylene sulfide).

(D) in Fig. 13 is an example in which PTFE (polytetrafuloroethylene) is included to PPS.

(E) in Fig. 13 is an example in which HDPE (high density polyethylene) is included to PC (polycarbonate).

(F) in Fig. 13 is an example manufactured by Mitsubishi Engineering Plastics Co., Ltd. in which glass fiber (GF) is included in 50% in terms of weight ratio to PC (polycarbonate).

(G) in Fig. 13 is an example or ordinary project of polycarbonate manufactured by Japan GE Plastic Co., Ltd. (C) to (G) in Fig. 13 are examples of comparison with (A) and (B) in Fig. 13.

In Fig. 13, an example of determination when the magnetic tape runs, for example, for 500 times in the rotary drum 2.

As a result of friction test, the result "GOOD" (◯) can be obtained because the material indicated in (A) of Fig. 13 shows the constant changing tendency of friction coefficient, maximum value of friction coefficient µmax is comparatively small and roughness of external circumference is comparatively small.

In the case of material of (B) in Fig. 13, change of friction coefficient µ tends to increase but it is not so bad as the determination.

Meanwhile, in the comparison examples of (C) to (G) in Figs. 13, change of friction coefficient µ tends to increase to a large extent but the friction test result is not so good.

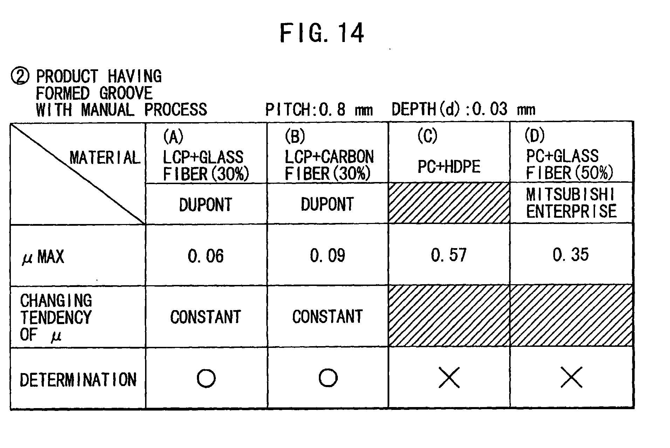

Fig. 14 illustrates an example that vertical line by the manual process, namely the grooves 2B, 1B parallel to the shaft direction as illustrated in Fig. 1 and Fig. 2 are formed. In this case, the pitch p is 0.8 mm and average value of depth d is 0.03 mm.

The materials of (A) and (B) in Fig. 14 are identical to those of (A) and (B) in Fig. 13. The material of (C) in Fig. 14 is identical to the material of (E) in Fig. 13 and the material of (D) in Fig. 14 is identical to the material of (F) in Fig. 13.

The materials of (A) and (B) in Fig. 14 are determined as good materials as a result of friction test. On the other hand, the materials of (C) and (D) in Fig. 14 do not show good result.

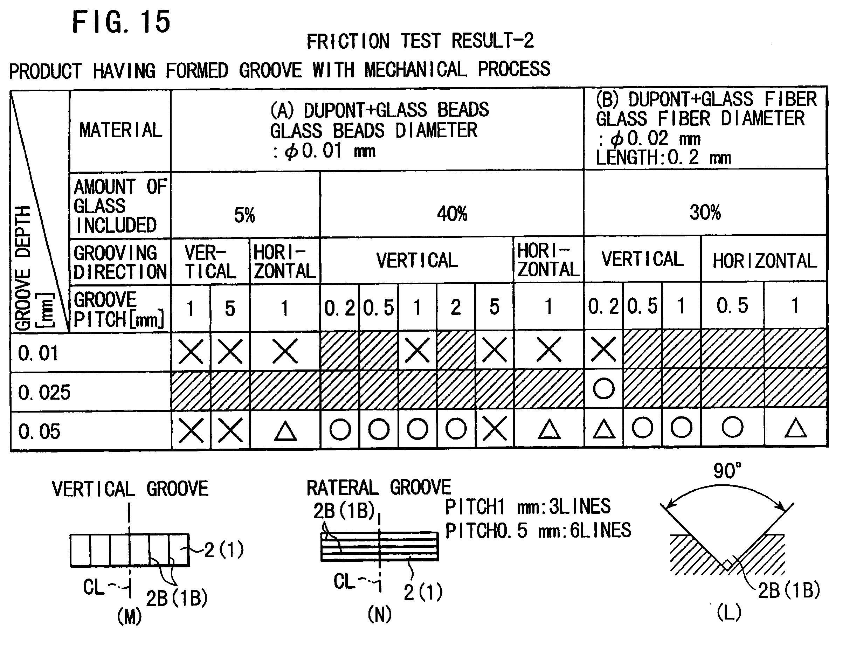

Fig. 15 illustrates an example of another friction test result. In this example, groove is formed to the tape running surface by the mechanical processing.

In the vertical columns of Fig. 15, three examples of depth d (mm) of the groove (also called as lines) are indicated.

Meanwhile, in the lateral columns of Fig. 15, material, content of glass beads (weight ratio), direction of groove and grove pitch (mm) are entered. Grooving direction "vertical" indicates the groove 2B or 1B parallel to the center shaft CL as illustrated in (M) of Fig. 15.

On the other hand, as an example of the lateral groove, the groove 2B or 1B is formed in the direction orthogonal to the center shaft CL in the rotary drum 2 or stationary drum 1 as illustrated in (N) of Fig. 15.

The material indicated in (A) of Fig. 15 is obtained by including glass beads (GB), for example, to the LCP (liquid crystal polymer) manufactured by Dupont. The glass bead has the diameter, for example, of 0.01 mm. As an example of contents of glass beads to the material of (A) in Fig. 15, the examples of 5% and 40% in the weight ratio are indicated.

(B) in Fig. 15 shows an example in which glass fiber (GF) is included to the liquid crystal polymer (LCP) and contents of glass fiber is 30% in terms of the weight ratio. The diameter of glass fiber is 0.02 mm and length of glass fiber is 0.2 mm.

In (A) and (B) of Fig. 15, examples of groove pitch p of 0.2 mm, 0.5 mm, 1 mm, 2 mm and 5 mm are indicated.

In the example where the groove is formed to the surface with the mechanical process, contents of glass is 40% in the material of (A) in Fig. 15 and good result has been obtained when the groove is formed in the vertical direction under the condition that the groove pitch is set to 0.2, 0.5, 1 or 2 mm for the groove depth of 0.05 mm.

On the other hand, the material of (B) in Fig. 15 is effective when the groove depth is 0.05 mm and the groove pitch is 0.5 and 1 mm when the grooving direction is vertical and lateral.

Moreover, the good friction test result has been good even when the groove depth is 0.025 mm, grooving direction is vertical and groove pitch is 0.2 mm.

In the example of friction test result of Fig. 15, the groove 2B or groove 1B has the triangular cross-sectional view and the angle of internal bottom is set to 90 degrees as illustrated in (L) of Fig. 15.

As illustrated in Fig. 13 and Fig. 14, the material obtained by forming the groove in the vertical direction as illustrated in Fig. 14 and Fig. 15 to the material called as the brand name Zenite manufactured by Dupont of (A) in Fig. 13 provides the best result because the friction coefficient $\mu$ of magnetic tape can be minimized during the running of magnetic tape, in regard to the friction coefficient $\mu$ of the magnetic tape when the magnetic tape TP is caused to run for the rotary drum 2 and stationary drum 1 of Fig. 1.

The experiments have proved for the relationship between the groove depth d and groove pitch p in Fig. 5 to Fig. 7 that the following range is adequate, depending on each material and friction coefficient $\mu$ of the magnetic tape TP.

① The glass beads of 40% in the weight ratio is included to the liquid crystal polymer (LCP). When the average diameter of glass beads is 0.1 mm,

$$0.5 \geqq d/p \geqq 0.05,\ d \geqq 0.025\ \text{mm},\ p \leqq 2\ \text{mm}.$$

In this case, if d/p is smaller than 0.05, it is not preferable because adhesion with tape type information storage medium (increase of friction coefficient $\mu$ ) occurs easily and when d/p is larger than 0.5, process of metal dies becomes difficult. Moreover, removal of molded product also becomes difficult.

When d is smaller than 0.025, it is not preferable because the tape type information storage medium is easily adhered and if p is larger than 2, it is also not preferable because the tape type information storage medium is also easily adhered.

② The glass fiber is included in 30% in the weight ratio to the liquid crystal polymer. When diameter of glass fiber is 0.02 mm and its length is 0.2 mm,

$$0.5 \geqq d/p \geqq 0.05,\ d \geqq 0.025\ \text{mm},\ 0.5\ \text{mm} \leqq p \leqq 2\ \text{mm}.$$

When d/p is smaller than 0.05, it is not preferable because the tape type information storage medium is easily adhered (increase of friction coefficient $\mu$ ). If d/p is larger than 0.5, metal dire process becomes difficult. Moreover, it is also not preferable because removal of molded product from the metal die becomes difficult. When d is smaller than 0.025 mm, it is not preferable because the tape type information storage medium is easily adhered. When p is smaller than 0.5 mm or larger than 2 mm, it is also not preferable because the tape type information storage medium is also easily adhered.

③ Carbon fiber of 30% in the weight ratio is included to the liquid crystal polymer (LCP). When diameter of carbon fiber is 0.02 mm and its length is 0.2 mm,

$$0.5 \geqq d/p \geqq 0.05,\ d \geqq 0.025\ \text{mm},\ 0.5\ \text{mm} \leqq p \leqq 2\ \text{mm}$$

When d/p is smaller than 0.05, it is not preferable because the tape type information storage medium is easily adhered (increase of friction coefficient $\mu$ ). When d/p is larger than 0.5, it is also not preferable because process of metal die becomes difficult. Moreover, in this case, removal of molded product from the metal die becomes difficult. When d is smaller than 0.025 mm, it is also not preferable because the tape type information storage medium is easily adhered. When p is smaller than 0.5 mm and larger than 2 mm, it is also not preferable because the tape type information storage medium is easily adhered..

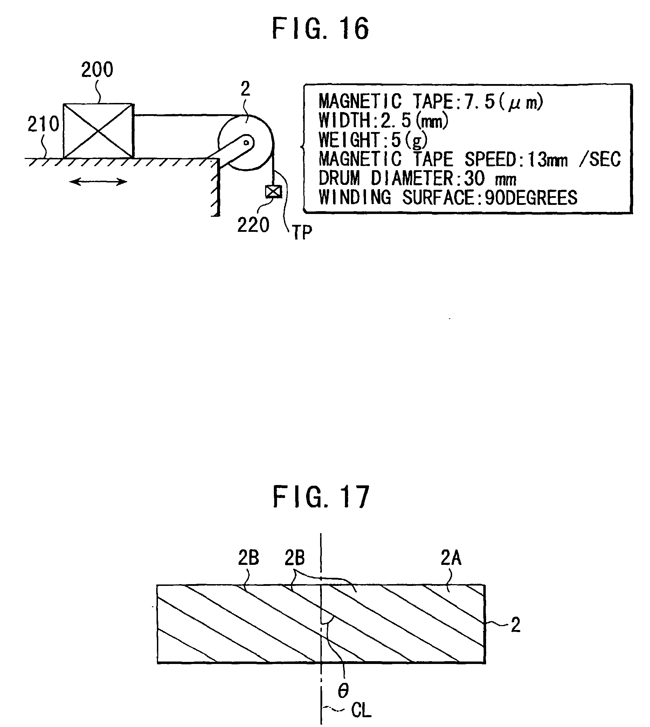

Fig. 16 illustrates an example of the friction test apparatus in Fig. 13 to Fig. 15. A load cell 200 is placed on a table 210 and the load cell 200 is connected to one end of the magnetic tape TP. The other end of the magnetic tape TP is provided with a weight 220. The magnetic tape TP is wound to the rotary drum 2 in the winding angle, for example, of 90 degrees. As an example, the drum diameter of this rotary drum 2 is 30 mm. Thickness of the magnetic tape is 7.5 $\mu$m and width is 2.5 mm. Feed speed of the magnetic tape TP is 13 mm/sec. A weight is as heavy as 5 g.

When the friction test is performed as illustrated in Fig. 14 and Fig. 15, using a friction coefficient measuring instrument illustrated in Fig. 16, the materials (A) and (B) in Fig. 14 and Fig. 15 have proved good result. Namely, the absolute value of the friction coefficient $\mu$ of the magnetic tape TP and the tape running surface of the rotary drum is low and the repeated running of the magnetic tape almost does not show any tendency to increase the friction coefficient $\mu$ of the magnetic tape TP.

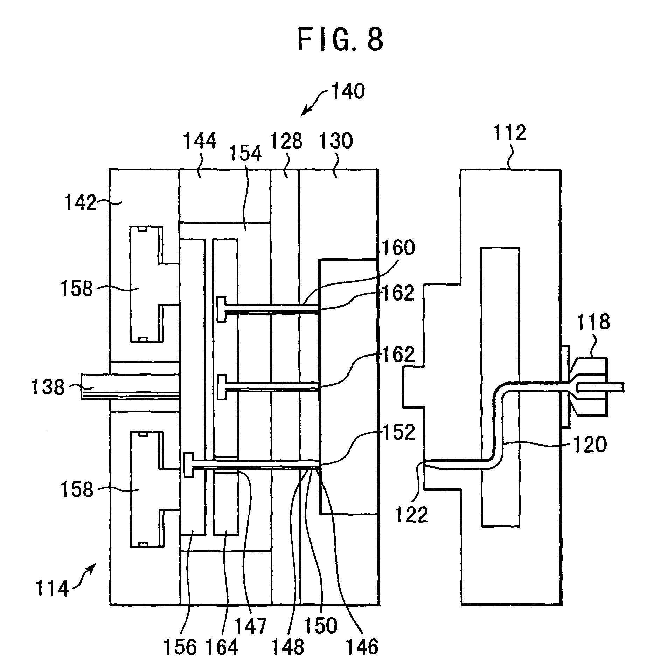

Next, an example of the manufacturing method by the injection molding of the rotary drum 2 or stationary drum 1 as illustrated in Fig. 1 will be explained with reference to Fig. 8 to Fig. 12.

A metal die 140 for injection molding has an ejector pin, pin hole and ejector pin drive mechanism as illustrated in Fig. 8.

The injection molding metal die 140 is provided with a fixed side metal die 112, a rear plate 128 and a moving side metal die body 130.

The rear plate 128 of the moving side metal die 114 is fixed to a thick drive mechanism fitting plate 142 via a spacer block 144.

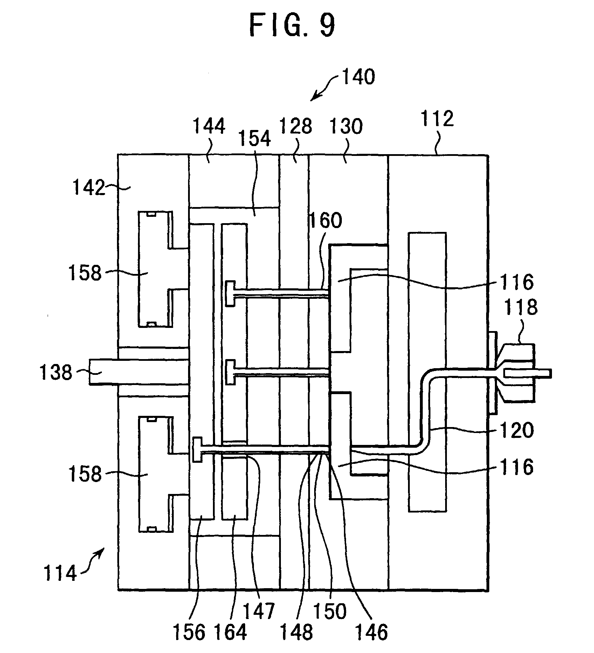

The end point 150 of the first ejector pin 148 going forward and backward within the one first pin hole 146 provided to the area near the gate 122 is located at the position at the rear side of a cavity opening end 152 of the first pin hole 146 when the resin is injected to the cavity as illustrated in Fig. 8 and Fig. 9.

The first ejector pin 148 is provided through the first pin hole 146, internal space 154 of spacer block 144 and pin hole 147 provided to the second ejector pin drive plate 164 to be explained later. The base area of the first ejector pin 148 is coupled to the first ejector pin drive plate 156 which goes forward and backward within the internal space 154.

The first ejector pin drive plate 156 is driven to freely go forward and backward with a couple of hydraulic type actuators 158 provided within the drive mechanism fitting plate 142.

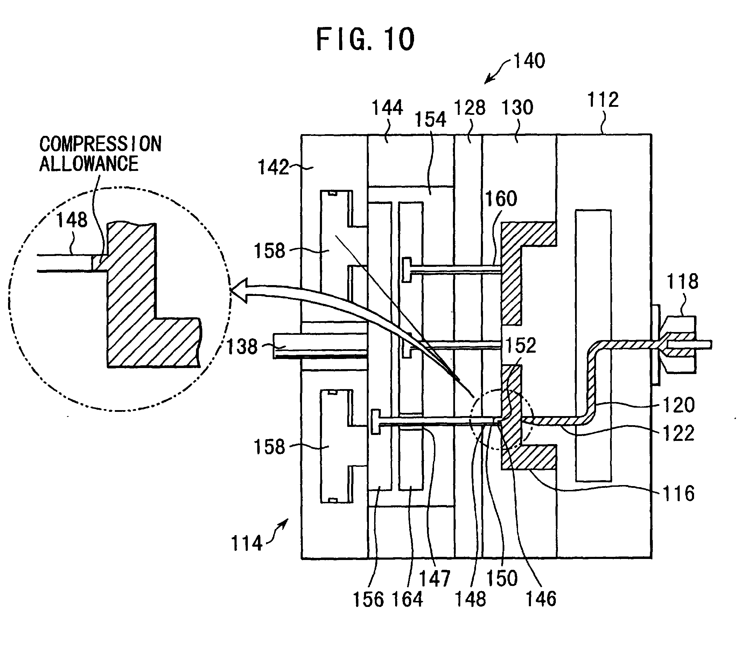

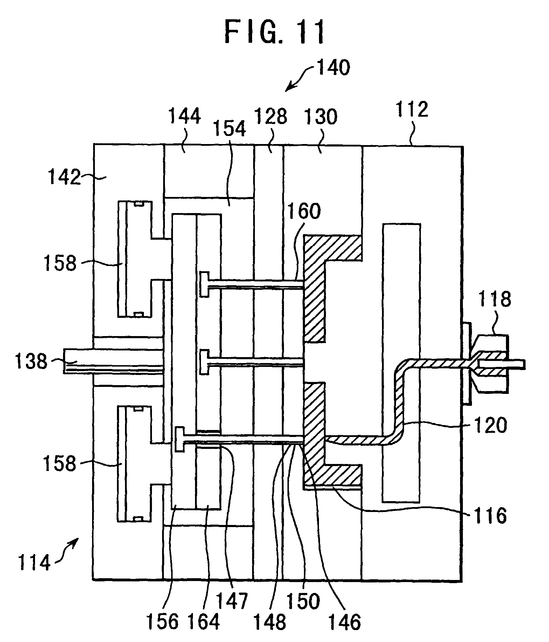

The first ejector pin 148 goes forward to the cavity opening end 152 of the first pin hole 146 from the backward position of the end point 150, as illustrated in Fig. 10 and Fig. 11, after the end of injection of resin to push the resin, into the cavity, staying in the pin hole up to the end point 150 of the first ejector pin 148 from the cavity opening end 152.

The second ejector pin 160 other than the first ejector pin 148 illustrated in Fig. 8 and Fig. 9 is provided through the second pin hole 162 and the base portion of the second ejector pin 160 is coupled with the second ejector pin drive plate 164 provided in the internal space 154 of the spacer block 144.

The second ejector pin 160 is located, when the resin is injected, at the cavity opening end of the second pin hole 162. The second ejector pin drive plate 164 goes forward integration with the first ejector pin drive plate 156 to push the second ejector pin 162 into the cavity 116 when a drive rod 138 goes forward.

Next, procedures for molding a rotary drum 1 as the annular molded product by the injection molding method using the injection molding metal die 140 explained above will be explained with reference to Fig. 9 to Fig. 12.

As illustrated in Fig. 9, the moving side metal die 114 is caused to go forward to be in contact with the fixed side metal die 112 to form a cavity 116.

Next, as illustrated in Fig. 10, resin is then injected to the cavity 116 from a valve 118 via a runner 120 and a gate 122. When the resin is injected to the cavity, the end point 150 of the first ejector pin 148 is located at the position in the rear side of the cavity opening end 152 of the first pin hole 146 and the resin is sufficiently supplied to fill the area up to the end point 150 of the first ejector pin 148 from the cavity opening end 152 of the first pin hole 146. Moreover, when the resin is injected, the first ejector pin drive plate 156 is isolated from the second ejector pin drive plate 164 and is located at the position in the rear side thereof.

Next, as illustrated in Fig. 11, a hydraulic actuator 158 is driven to make the first elector pin drive plate 156 to go forward to be in contact with the second ejector pin drive plate 164.

Thereby, the first ejector pin 152 goes forward up to the cavity opening end 152 of the first pin hole 146 from the backward position in order to push the resin, into the cavity 116, staying in the pin hole are up to the end point 150 of the first ejector pin 152 from the cavity opening end 152.

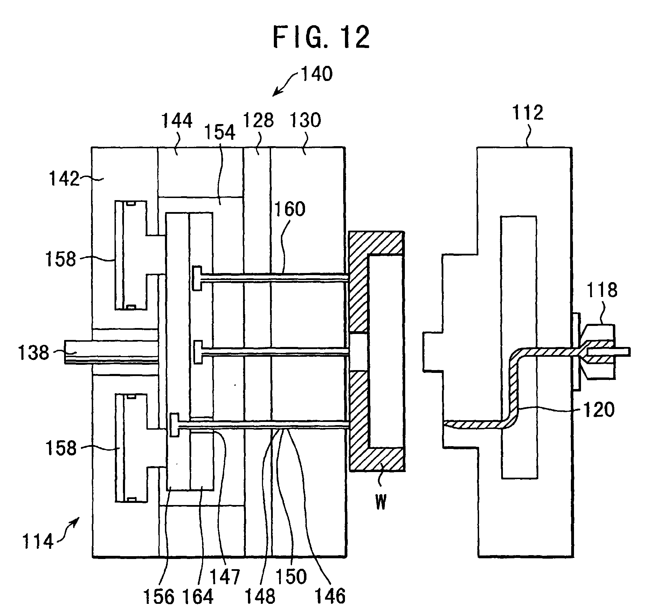

Next, after the resin is hardened within the cavity 116, the moving side metal die 114 is caused to go backward, as illustrate in Fig. 12, to be isolated from the fixed side metal die 112. Subsequently, the drive rod 138 is caused to go forward to simultaneously proceed the first ejector pin drive plate 156 and second ejector pin drive plate 154. Thereby, the first ejector pin 148 and second ejector pin 162 are caused to be projected into the cavity 116 to drop the molded product W to the predetermined position by pushing out it from the cavity 116.

The end point of the first ejector pin which goes forward and backward within at least one pin hole provided at the area near the gate is located at the position rear side of the cavity opening end of the pin hole when the resin is injected to the cavity and after the end of injection of resin, the end point goes forward from the rear position to push the resin staying in the pin hole up to the end point of the ejector pin from the cavity opening end of the pin hole. Thereby, the rotary drum 1 having the uniform density distribution is capable of forming the annular molded product by the injection molding.

With the ejector pin explained above, the molded product can be compressed. As the effect of this compression molding, it has been confirmed that the external diameter of 30.087 mm to 30.090 mm of rotary drum and the stationary can be obtained for the actually measured value of internal diameter of metal die of 30.090 mm and the rotary drum 2 or stationary drum 1 of the size of metal die can be actually formed through the compression molding by ejector pin or the mixing of at least one of the glass fiber, glass beads and carbon fiber to the liquid crystal polymer in the weight ratio of 30% to 50%. Thereby, contraction coefficient of rotary drum or stationary drum at the time of injection molding can be reduced to almost zero.

If a material including any one of glass fiber, glass beads and carbon fiber or at least two materials of these is mixed to the liquid crystal polymer, it is not preferable because it will results in increase of contraction coefficient, drop of thermal deformation temperature and cost increase. When mixing exceeds 50% in with weight ratio, molding and mixing are impossible because the resin portion for combining the carbon disappears at a certain portion.

Moreover, it is preferable that the time for solidifying the material by the injection molding using metal die is set to 0.2 sec to 0.8 sec.

When the solidifying time is shorter than 0.2 sec, it is not preferable because compressed molding becomes difficult and solidifying becomes impossible, the material showing the solidifying time longer than 0.8 sec results in larger contraction and molding cycle becomes longer.

When the compressed molding is performed during the injection molding using the ejector pin, the molded rotary drum or stationary drum is only increased in size of about 10 μm in comparison with the internal diameter of metal die in the diameter direction. Accordingly, contraction coefficient in size of the molded product of the rotary drum or stationary drum formed for the actually measured size of the diameter of metal die as explained above can be reduced almost to zero.

It is preferable that the number of ejector pins and compression allowance for compressed molding are optimized, although in case by case, depending on the conditions such as the size of stationary drum and rotary drum to be molded.

When the liquid crystal polymer as explained above is used together with the rotary drum (or upper drum) and stationary drum (or lower drum), direct formation of wiring pattern can be conducted by the Au plating or the like using MID (Molded Interconnection Device). For such wiring pattern, electronic parts may be mounted in direct. Therefore, in the related art, works such as additional attaching of wiring parts such as flexible substrate or printed circuit board to the aluminum stationary drum and rotary drum are required, however, in the present invention, such works are never required and thereby number of parts and steps can be reduced.

Since the rotary drum and stationary drum are manufactured using the injection molding method, if shape of these drums are complicated, these drum can be formed easily only with single molding process and thereby cost reduction can be realized and facility investment can also be controlled.

It is of course possible to introduce the rotary magnetic recording/reproducing apparatus of the present invention to DAT (Digital Audio Tape recorder) or recorder using the magnetic tape such as digital or recording 8 mm tape and to the other kind of device, as well as an ordinary VTR (Video Tape Recorder).

Fig. 17 illustrates the other embodiment of the present invention. For example, a plurality of grooves 2B are diagonally formed in the angle θ for the center shaft CL at the tape running surface of the rotary drum 2. These grooves 2B are formed in every predetermined angle in the predetermined pitch p. Even in this case, adhesion of magnetic tape can be prevented and friction coefficient μ of magnetic tape can be reduced.

**Claims**

**1.** A rotary magnetic recording/reproducing apparatus, comprising:

    a stationary member, and

a rotary member on which at least one of a magnetic write head and a magnetic read head is installed to record information on a magnetic storage medium like a tape or to reproduce information from said magnetic storage medium like a tape through continuous rotation thereof against said stationary member, whereby

the running surface, on which said tape type magnetic storage medium runs, in at least one of said stationary member and rotary member is formed by the injection molding method using liquid crystal polymer including at least one of glass material and carbon fiber.

2. A rotary magnetic recording/reproducing apparatus as claimed in claim 1, wherein a plurality of grooves are formed in the predetermined pitch on said running surface, and said glass material includes at least one of glass beads and glass fiber.

3. A rotary magnetic recording/reproducing apparatus as claimed in claim 2, wherein a weight ratio of at least one of said glass material and carbon fiber against said liquid crystal polymer ranges from 30% to 50%.

4. A rotary magnetic recording/reproducing apparatus as claimed in claim 2, wherein said grooves are formed along the direction parallel to the shaft direction of said rotary member and a relationship equation of the pitch p of said grooves and depth d of said grooves is expressed as follows:

$$0.5 \geqq d/p \geqq 0.05.$$

5. A rotary magnetic recording/reproducing apparatus as claimed in claim 1, wherein said grooves are formed in the predetermined pitch along the direction orthogonal to the shaft direction of said rotary member.

6. A rotary magnetic recording/reproducing apparatus as claimed in claim 1, wherein said grooves are formed in the predetermined pitch along the diagonal direction against the shaft direction of said rotary member.

7. A rotary magnetic recording/reproducing apparatus as claimed in claim 1, wherein the cross-section of said grooves has a triangular shape.

8. A rotary magnetic recording/reproducing apparatus as claimed in claim 1, wherein the cross-section of said grooves has a square shape.

9. A rotary magnetic recording/reproducing apparatus as claimed in claim 1, wherein the cross-section of said grooves has an arc shape.

10. A method of fabricating a rotary magnetic recording/reproducing apparatus, comprising a stationary member and a rotary member on which at least one of a magnetic write head and a magnetic read head is installed to record information on a magnetic storage medium like a tape or to reproduce information from said magnetic storage medium like a tape through continuous rotation thereof against said stationary member, whereby the running surface, on which said tape type magnetic recording medium runs, in at least one of said stationary member and rotary member is formed by the injection molding method using liquid crystal polymer including at least one of glass material and carbon fiber.

11. A method of fabricating a rotary magnetic recording/reproducing apparatus as claimed in claim 10, wherein the solidifying time in said injection molding is 0.2 to 0.8 seconds and said glass material includes at least one of glass beads and glass fiber.

12. A method of fabricating a rotary magnetic recording/reproducing apparatus as claimed in claim 11, wherein a weight ratio of at least one of said glass material and carbon fiber against said liquid crystal polymer ranges from 30% to 50%.

13. A method of fabricating a rotary magnetic recording/reproducing apparatus as claimed in claim 10, wherein said grooves are formed along the direction parallel to the shaft direction of said rotary member and a relationship equation of the pitch p of said grooves and depth d of said grooves is expressed as follows:

$$0.5 \geqq d/p \geqq 0.05.$$

14. A method of fabricating a rotary magnetic recording/reproducing apparatus as claimed in claim 10, wherein said grooves are formed in the predetermined pitch along the direction orthogonal to the shaft direction of said rotary member.

15. A method of fabricating a rotary magnetic recording/reproducing apparatus as claimed in claim 10, wherein electric circuits are formed on the surface of said stationary member and rotary member.

# FIG. 1

# FIG. 2

# FIG. 3

# FIG. 4

# FIG. 5

## FIG. 6

## FIG. 7

# FIG. 8

# FIG. 9

EP 1 037 200 A2

FIG. 10

COMPRESSION
ALLOWANCE

# FIG. 11

# FIG. 12

# FIG. 13

## FRICTION TEST RESULT-1

① PRODUCT HAVING THE SURFACE
ROUGHED BY MANUAL PROCESS

RUNNING OF
500 TIMES

| MATERIAL | (A)<br>LCP+GLASS<br>FIBER(30%)<br>DUPONT | (B)<br>LCP+CARBON<br>FIBER(30%)<br>DUPONT | (C)<br>PPS+PP$_1$<br>NON-ORGANIC<br>IDEMITSU | (D)<br>PPS+PTFE<br><br>IDEMITSU | (E)<br>PPS+HDPE<br><br>//////// | (F)<br>PC+GLASS<br>FIBER(50%)<br>MITSUBISHI<br>ENTERPRISE | (G)<br>PC NATURAL<br><br>JAPAN GE |
|---|---|---|---|---|---|---|---|
| ROUGHNESS<br>OF EXTERNAL<br>CIRCUMFERENCE | 7.6s | 8.2s | 10.9s | 8.7s | 14.4s | 12.7s | //////// |
| $\mu$ MAX | 0.25 | 0.3 | 0.55 | 0.48 | 0.36 | 0.39 | 0.65 |
| CHANGING<br>TENDENCY<br>OF $\mu$ | CONSTANT | INCREASED<br>A LITTLE | INCREASED | INCREASED | INCREASED | CONSTANT | //////// |
| DETERMINATION | ○ | ○○ | △ | △ | △ | △ | × |

EP 1 037 200 A2

# FIG. 14

② PRODUCT HAVING
  FORMED GROOVE
  WITH MANUAL PROCESS          PITCH:0.8 mm    DEPTH(d):0.03 mm

| MATERIAL | (A)<br>LCP+GLASS<br>FIBER (30%)<br>DUPONT | (B)<br>LCP+CARBON<br>FIBER (30%)<br>DUPONT | (C)<br>PC+HDPE<br>////// | (D)<br>PC+GLASS<br>FIBER (50%)<br>MITSUBISHI<br>ENTERPRISE |
|---|---|---|---|---|
| $\mu$ MAX | 0.06 | 0.09 | 0.57 | 0.35 |
| CHANGING<br>TENDENCY<br>OF $\mu$ | CONSTANT | CONSTANT | ////// | ////// |
| DETERMINATION | ◯ | ◯ | ✕ | ✕ |

# FIG. 15

### FRICTION TEST RESULT-2
### PRODUCT HAVING FORMED GROOVE WITH MECHANICAL PROCESS

| GROOVE DEPTH [mm] / MATERIAL | (A) DUPONT+GLASS BEADS GLASS BEADS DIAMETER :φ0.01 mm | | | | | | | | | (B) DUPONT+GLASS FIBER GLASS FIBER DIAMETER :φ0.02 mm LENGTH:0.2 mm | | | | |
|---|---|---|---|---|---|---|---|---|---|---|---|---|---|---|
| AMOUNT OF GLASS INCLUDED | 5% | | | 40% | | | | | | 30% | | | | |
| GROOVING DIRECTION | VERTICAL | | HORIZONTAL | VERTICAL | | | | | HORIZONTAL | VERTICAL | | | HORIZONTAL | |
| GROOVE PITCH [mm] | 1 | 5 | 1 | 0.2 | 0.5 | 1 | 2 | 5 | 1 | 0.2 | 0.5 | 1 | 0.5 | 1 |
| 0.01 | ✕ | ✕ | ✕ | (hatch) | (hatch) | ✕ | (hatch) | ✕ | ✕ | ✕ | (hatch) | (hatch) | (hatch) | (hatch) |
| 0.025 | (hatch) | (hatch) | (hatch) | (hatch) | (hatch) | (hatch) | (hatch) | (hatch) | (hatch) | ◯ | (hatch) | (hatch) | (hatch) | (hatch) |
| 0.05 | ✕ | ✕ | △ | ◯ | ◯ | ◯ | ◯ | ✕ | △ | △ | ◯ | ◯ | ◯ | △ |

VERTICAL GROOVE
—2(1)
CL~⌐ 2B(1B)
(M)

RATERAL GROOVE
2B(1B)
PITCH1 mm:3LINES
PITCH0.5 mm:6LINES
CL~⌐ 2(1)
(N)

90°
2B(1B)
(L)

# FIG. 16

MAGNETIC TAPE:7.5($\mu$m)
WIDTH:2.5(mm)
WEIGHT:5(g)
MAGNETIC TAPE SPEED:13mm /SEC
DRUM DIAMETER:30 mm
WINDING SURFACE:90DEGREES

# FIG. 17